# EUROPÄISCHE PATENTANMELDUNG

(11) **EP 3 816 844 A1**
(43) Veröffentlichungstag der Anmeldung: **05.05.2021**
(21) Anmeldenummer: 19205976.4
(22) Anmeldetag: 29.10.2019
(51) Int. Cl.: G06F 40/295, G06F 16/35

(54) **COMPUTERIMPLEMENTIERTES VERFAHREN UND VORRICHTUNG ZUM VERARBEITEN VON DATEN**

(71) Anmelder: Robert Bosch GmbH, 70442 Stuttgart (DE)
(72) Erfinder: Stroetgen, Jannik, 76135 Karlsruhe (DE); Adel, Heike, 70565 Stuttgart (DE); Lange, Lukas, 75177 Pforzheim (DE)

(57) **Zusammenfassung**

Computerimplementiertes Verfahren (300) zum Verarbeiten von Textdaten (102) umfassend eine Vielzahl von Textbausteinen, wobei eine Repräsentation des Textes (102) bereitgestellt (310) wird, und wobei ein Modell verwendet wird, das abhängig von der Repräsentation des Textes (102) eine Klassifizierung für einen jeweiligen Textbaustein des Textes (102) vorhersagt, wobei das Bereitstellen (310) der Repräsentation des Textes (102) das Bereitstellen (310') eines Gesamtwortvektors (500) für einen jeweiligen Textbaustein des Textes (102) umfasst, wobei der Gesamtwortvektor (500) aus wenigstens zwei, vorzugsweise mehreren, Wortvektoren (510) gebildet wird (314), und ein jeweiliger Wortvektor (510) in Abhängigkeit von Eigenschaften des jeweiligen Textbausteins gewichtet wird.

## Beschreibung

### Stand der Technik

Die Offenbarung betrifft ein computerimplementiertes Verfahren und eine Vorrichtung zum Verarbeiten von Textdaten umfassend eine Vielzahl von Textbausteinen, insbesondere mit einem künstlichen neuronalen Netz.

Beispielsweise werden für die Verarbeitung von Textdaten rekurrente neuronale Netze in Verbindung mit einem Conditional Random Field Classifier, CRF eingesetzt. Dabei wird jedes Wort eines Texts durch einen distributionellen Vektor repräsentiert. Dazu werden beispielsweise konkatenierte Wordrepräsentationen benutzt, die auf großen Mengen ungelabelter Textdaten trainiert wurden. Ein Beispiel dafür ist in Akbik et. al. 2018 "Contextual String Embeddings for Sequence Labeling" https://www.aclweb.org/anthology/C18-1139 offenbart.

Diese aus dem Stand der Technik verwendeten konkatenierten Wordrepräsentationen umfassen nachteilig hochdimensionale Vektoren. Dies wiederum erhöht die Anzahl von Parametern, die gelernt werden müssen, um basierend auf der Wortrepräsentation eine Klassifizierung vorzunehmen. Ferner ist eine wort- oder kontextabhängige Wortrepräsentation wünschenswert.

### Offenbarung der Erfindung

Dies wird durch den Gegenstand der unabhängigen Ansprüche erreicht.

Die Offenbarung betrifft ein computer-implementiertes Verfahren zum Verarbeiten von Textdaten umfassend eine Vielzahl von Textbausteinen, wobei eine Repräsentation des Textes bereitgestellt wird, und wobei ein Modell verwendet wird, das abhängig von der Repräsentation des Textes eine Klassifizierung für einen jeweiligen Textbaustein des Textes vorhersagt, wobei das Bereitstellen der Repräsentation des Textes das Bereitstellen eines Gesamtwortvektors für einen jeweiligen Textbaustein des Textes umfasst, wobei der Gesamtwortvektor aus wenigstens zwei, vorzugsweise mehreren, Wortvektoren gebildet wird, und ein jeweiliger Wortvektor in Abhängigkeit von Eigenschaften des jeweiligen Textbausteins gewichtet wird.

Bevorzugt wird abhängig vom Modell ein Textbaustein identifiziert und einer Klasse aus einer Menge Klassen zugeordnet. Ein Textbaustein ist beispielsweise ein Wort des Textes. Das Modell klassifiziert jedes Wort des vorliegenden Textes einzeln als zu einer vorgegebenen Menge an Klassen zugehörig, z.B. Personen, Orte, Materialien, etc..

Der Gesamtwortvektor ist also keine Konkatenation der einzelnen Wortvektoren, sondern wird vorteilhafterweise in Abhängigkeit von Eigenschaften des jeweiligen Textbausteins als eine gewichtete Kombination der Wortvektoren gebildet. Dies ermöglicht vorteilhafterweise eine wort- und/oder domänenabhängige Gewichtung der Wortvektoren und bietet damit die Möglichkeit, wort- und/oder domänenabhängig bestimmte Wortvektoren zu bevorzugen oder zu vernachlässigen.

Vorzugsweise umfasst das Modell ein rekurrentes neuronales Netz. Dieses Modell eignet sich besonders gut für das Klassifizieren.

Gemäß einer Ausführungsform umfasst das Verfahren weiter das Berechnen eines Gewichts für einen jeweiligen Wortvektor. Das Modell umfasst beispielsweise eine Attentionfunktion, die ausgebildet ist, einzelne Wortvektoren der Textbausteine abhängig von Gewichten zu gewichten.

Gemäß einer Ausführungsform wird ein Gewicht für einen jeweiligen Wortvektor zusätzlich in Abhängigkeit des jeweiligen Wortvektors berechnet.

Gemäß einer Ausführungsform repräsentiert eine erste Eigenschaft eines jeweiligen Textbausteins eine relative Häufigkeit des Textbausteins im Text und/oder eine zweite Eigenschaft des jeweiligen Textbausteins repräsentiert eine Länge des Textbausteins und/oder eine dritte Eigenschaft des jeweiligen Textbausteins repräsentiert eine Form des Textbausteins und/oder eine vierte Eigenschaft des jeweiligen Textbausteins repräsentiert eine syntaktische Kategorie des Textbausteins. Vorteilhafterweise werden diese Eigenschaften zur Berechnung des Gewichts eines jeweiligen Wortvektors verwendet.

Gemäß einer Ausführungsform werden die Gewichte der Wortvektoren eines Gesamtwortvektors in einen Wertebereich zwischen 0, 1 transformiert. Beispielsweise werden die Gewichte mittels der Softmax-Funktion auf Werte zwischen 0 und 1 transformiert, wobei sich die Werte zu 1 aufsummieren.

Gemäß einer Ausführungsform wird ein Gesamtwortvektor für einen jeweiligen Textbaustein aus der Summe aus wenigstens zwei, vorzugsweise mehreren, gewichteten Wortvektoren gebildet. Die Wortvektoren werden mit ihren Gewichten multipliziert und zum Gesamtwortvektor aufsummiert. In der Repräsentation des Textes wird dann für jeden Textbaustein des Textes ein Gesamtwortvektor verwendet.

Die Offenbarung betrifft weiter ein Verfahren zum Maschinenlernen, wobei ein Modell zum Ausführen des Verfahrens gemäß den Ausführungsformen zur automatischen Klassifizierung von Textbausteinen eines Textes abhängig von der Repräsentation des Textes trainiert wird, wobei die Repräsentation einen Gesamtwortvektor für einen jeweiligen Textbaustein des Textes umfasst, wobei der Gesamtwortvektor aus wenigstens zwei, vorzugsweise mehreren, Wortvektoren gebildet wird, und ein jeweiliger Wortvektor in Abhängigkeit von Eigenschaften des jeweiligen Textbausteins gewichtet wird.

Gemäß einer Ausführungsform umfasst das Modell eine Attentionfunktion, und das Verfahren umfasst das Trainieren der Attentionfunktion. Die Attentionfunktion ist beispielsweise ausgebildet, einzelne Wortvektoren der Textbausteine abhängig von Gewichten zu gewichten. Vorteilhafterweise wird das Modell anhand von Textdaten trainiert, eine optimierte Gewichtung für die einzelnen Wortvektoren zu berechnen.

Gemäß einer Ausführungsform wird das Modell trainiert, einen bestimmten Wortvektor, insbesondere einen domänenspezifischen Wortvektor, für einen bestimmten Textbaustein, insbesondere für einen domänenspezifischen Textbaustein, stärker zu gewichten als einen anderen, insbesondere domänenunspezifischen, Wortvektor.

Die Offenbarung betrifft eine Vorrichtung zum Verarbeiten von Textdaten, wobei die Vorrichtung einen Prozessor, und einen Speicher für ein künstliches neuronales Netz umfasst, die ausgebildet sind das Verfahren gemäß den Ausführungsformen auszuführen.

Die Offenbarung betrifft eine Vorrichtung zum Maschinenlernen, wobei die Vorrichtung einen Prozessor, und einen Speicher für ein künstliches neuronales Netz umfasst, die ausgebildet sind das Verfahren gemäß den Ausführungsformen auszuführen.

Die Offenbarung betrifft weiter ein Computerprogramm, wobei das Computerprogramm computerlesbare Instruktionen umfasst, bei deren Ausführung auf einem Computer ein Verfahren gemäß den Ausführungsformen abläuft.

Weitere Ausführungsformen betreffen die Verwendung des computerimplementierten Verfahrens zum Verarbeiten von Textdaten gemäß den Ausführungsformen zum automatischen Extrahieren von Informationen aus Textdaten, beispielsweise bezüglich Entitäten, insbesondere Personen, Orte, Organisationen, etc. und/oder bezüglich Konzepten, insbesondere Proteine, Chemikalien, Materialien, etc..

Weitere Ausführungsformen betreffen die Verwendung des computerimplementierten Verfahrens in Modellen zum Erstellen von Datenbanken, insbesondere strukturierten Wissensdatenbanken, insbesondere Knowledge Graphen, wobei das Verfahren gemäß den Ausführungsformen angewendet wird, zum Extrahieren von Informationen aus Textdaten, und die Informationen zum Erstellen von Datenbanken, insbesondere strukturierten Wissensdatenbanken, insbesondere Knowledge Graphen verwendet werden. Das Verfahren gemäß den Ausführungsformen ist für Texte in verschiedenen Sprachen und aus verschiedenen Domänen anwendbar.

Ferner kann das Verfahren gemäß den Ausführungsformen auch im Bereich der der Computerlinguistik, Natural Language Processing, insbesondere im Bereich Syntaxanalyse, Relationsextraktion und Textzusammenfassung, angewendet werden.

Weitere vorteilhafte Ausführungsformen ergeben sich aus der folgenden Beschreibung und der Zeichnung. In der Zeichnung zeigt
- Fig. 1: eine schematische Darstellung einer Vorrichtung zum Verarbeiten von Textdaten;
- Fig. 2: eine schematische Darstellung einer Vorrichtung zum Maschinenlernen,
- Fig. 3: Schritte eines Verfahrens zum Verarbeiten von Textdaten;
- Fig. 4: Schritte eines Verfahrens zum Maschinenlernen, und
- Fig. 5: eine schematische Darstellung einer Repräsentation eines Textbausteins eines Textes.

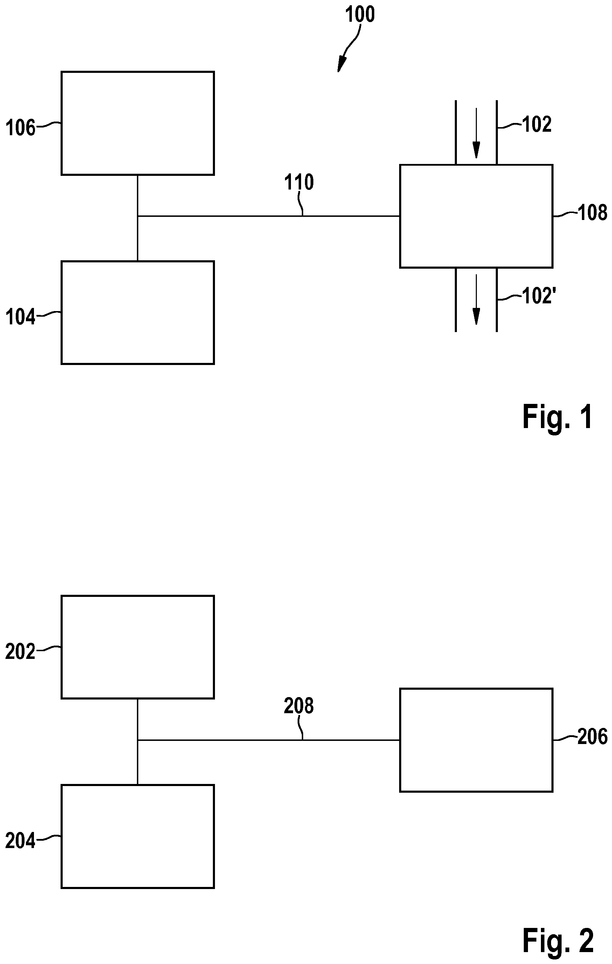

Figur 1 stellt eine Vorrichtung 100 zum Verarbeiten von Textdaten 102 dar.

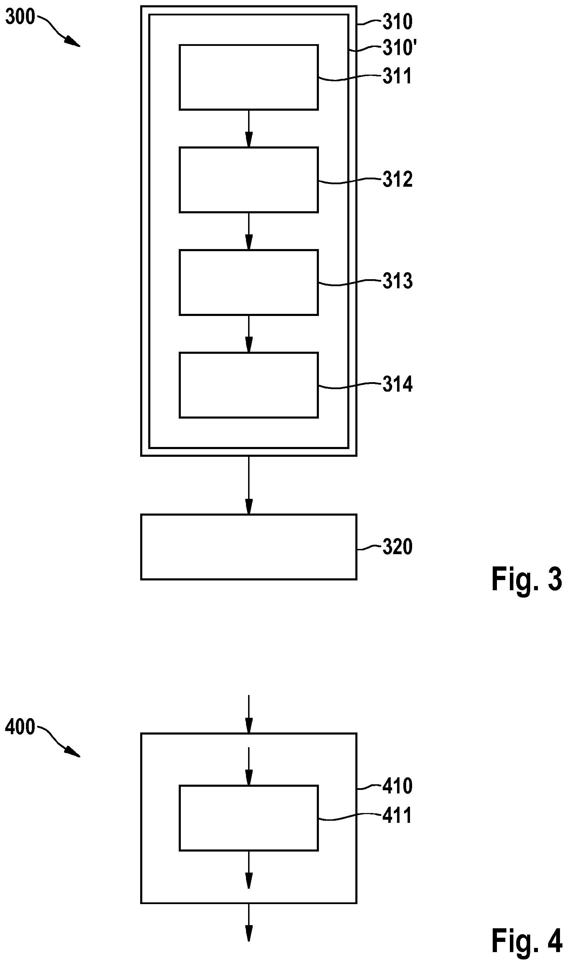

Diese Vorrichtung 100 umfasst einen Prozessor 104 und einen Speicher 106 für das Modell, insbesondere ein rekurrentes neuronales Netz. Die Vorrichtung 100 umfasst im Beispiel eine Schnittstelle 108 für eine Eingabe und eine Ausgabe von Daten. Der Prozessor 104, der Speicher 106 und die Schnittstelle 108 sind über wenigstens eine Datenleitung 110, insbesondere einen Datenbus, verbunden. Der Prozessor 104 und der Speicher 106 können in einen Mikrocontroller integriert sein. Die Vorrichtung 100 kann auch als verteiltes System in einer Serverinfrastruktur ausgebildet sein. Diese sind ausgebildet das im Folgenden anhand der Figur 3 beschriebene Verfahren zum Verarbeiten von Textdaten 102 auszuführen. Aus der Verarbeitung des Textes 102 als Eingabe der Schnittstelle 108 resultierende Daten 102' sind in Figur 1 als Ausgabe der Schnittstelle 108 dargestellt.

Figur 2 stellt eine Vorrichtung 200 zum Maschinenlernen schematisch dar. Diese Vorrichtung 200 umfasst einen Prozessor 202, und einen Speicher 204 für das neuronale Netz. Die Vorrichtung 200 umfasst im Beispiel eine Schnittstelle 206 für eine Eingabe und eine Ausgabe von Daten. Der Prozessor 202, der Speicher 204 und die Schnittstelle 206 sind über wenigstens eine Datenleitung 208 verbunden. Die Vorrichtung 200 kann auch als verteiltes System in einer Serverinfrastruktur ausgebildet sein. Diese sind ausgebildet das Verfahren zum Maschinenlernen auszuführen, das im Folgenden anhand der Figur 4 beschrieben wird.

Figur 3 stellt Schritte in einem Verfahren 300 zum Verarbeiten von Textdaten dar.

Das Verfahren 300 zum Verarbeiten von Textdaten umfassend eine Vielzahl von Textbausteinen, umfasst einen Schritt 310 zum Bereitstellen einer Repräsentation des Textes und einen Schritt 320 zum Verwenden eines Modells, das abhängig von der Repräsentation des Textes eine Klassifizierung für einen jeweiligen Textbaustein des Textes vorhersagt. Der Schritt 320 erfolgt beispielsweise unter Verwendung eines Conditional Random Field Classifier, CRF.

Das Bereitstellen 310 der Repräsentation des Textes umfasst das Bereitstellen 310' eines Gesamtwortvektors für einen jeweiligen Textbaustein des Textes, wobei der Gesamtwortvektor aus wenigstens zwei, vorzugsweise mehreren, Wortvektoren gebildet wird, und ein jeweiliger Wortvektor in Abhängigkeit von Eigenschaften des jeweiligen Textbausteins gewichtet wird.

Bevorzugt wird abhängig vom Modell ein Textbaustein identifiziert und einer Klasse aus einer Menge Klassen zugeordnet. Ein Textbaustein ist beispielsweise ein Wort des Textes.

Das Bereitstellen 310' des Gesamtwortvektors für einen jeweiligen Textbaustein umfasst vorteilhafterweise die folgenden Schritte:
Bereitstellen 311 von wenigstens zwei, vorteilhafterweise mehreren Wortvektoren für einen jeweiligen Textbaustein.

Vorteilhafterweise umfasst das Bereitstellen 310' weiter das Transformieren, insbesondere mittels Lineartransformation, der Wortvektoren auf die gleiche Dimension.

In einem weiteren Schritt 312 werden Gewichte für die Wortvektoren berechnet. Gemäß der Ausführungsform wird ein Gewicht für einen jeweiligen Wortvektor in Abhängigkeit von Eigenschaften des jeweiligen Textbausteins berechnet. Das Modell umfasst beispielsweise eine Attentionfunktion, die ausgebildet ist, einzelne Wortvektoren der Textbausteine abhängig von Gewichten zu gewichten.

Gemäß einer Ausführungsform repräsentiert eine erste Eigenschaft eines jeweiligen Textbausteins eine relative Häufigkeit des Textbausteins im Text und/oder eine zweite Eigenschaft des jeweiligen Textbausteins repräsentiert eine Länge des Textbausteins und/oder eine dritte Eigenschaft des jeweiligen Textbausteins repräsentiert eine Form des Textbausteins und/oder eine vierte Eigenschaft des jeweiligen Textbausteins repräsentiert eine syntaktische Kategorie des Textbausteins. Vorteilhafterweise werden diese Eigenschaften zur Berechnung des Gewichts eines jeweiligen Wortvektors verwendet.

Vorteilhafterweise werden unterschiedliche Wortvektoren in Abhängigkeit von Eigenschaften des jeweiligen Textbausteins unterschiedlich gewichtet.

Beispielsweise kann vorteilhaft sein, für Textbausteine mit einer geringen relativen Häufigkeit buchstaben-basierte Wortvektoren stärker zu gewichten. Damit kann vorteilhaft kompensiert werden, dass Textbausteine mit einer geringen relativen Häufigkeit in wort-basierten Wortvektoren schlecht abgebildet oder teilweise gar nicht erfasst werden können.

Beispielsweise kann es vorteilhaft sein, für Textbausteine mit einer größeren Länge buchstaben- oder teilwort-basierte Wortvektoren stärker zu gewichten. Damit kann vorteilhaft kompensiert werden, dass längere Textbausteine, insbesondere Wortzusammensetzungen und/oder Wortneuschöpfungen von wort-basierten Wortvektoren schlecht abgebildet oder teilweise gar nicht erfasst werden können.

Unter einer Form eines Textbausteins wird eine Erscheinungsform des Textbausteins, beispielsweise Groß- und Kleinschreibung, das Auftreten von Zahlen und/oder Satzzeichen und/oder unbekannte Zeichen, insbesondere Unicodezeichen, verstanden. In Abhängigkeit der Form kann es ebenfalls vorteilhaft sein, unterschiedliche Wortvektoren unterschiedlich stark zu gewichten.

Unter einer syntaktischen Kategorie eines Textbausteins, engl. Part-of-Speech, wird eine Art von Wörtern einer Sprache aufgrund der Zuordnung nach gemeinsamen grammatischen Merkmalen verstanden. In Abhängigkeit der syntaktischen Kategorie des Textbausteins kann es ebenfalls vorteilhaft sein, unterschiedliche Wortvektoren unterschiedlich stark zu gewichten.

Gemäß einer Ausführungsform wird ein Gewicht für einen jeweiligen Wortvektor zusätzlich in Abhängigkeit des jeweiligen Wortvektors berechnet.

In einem weiteren Schritt 313 werden die Gewichte der Wortvektoren eines Gesamtwortvektors in einen Wertebereich zwischen 0, 1 transformiert. Beispielsweise werden die Gewichte mittels der Softmax-Funktion auf Werte zwischen 0 und 1 transformiert, wobei sich die Werte zu 1 aufsummieren.

In einem Schritt 314 wird ein Gesamtwortvektor für einen jeweiligen Textbaustein aus der Summe aus wenigstens zwei, vorzugsweise mehreren, gewichteten Wortvektoren gebildet. Die Wortvektoren werden mit ihren Gewichten multipliziert und zum Gesamtwortvektor aufsummiert. In der Repräsentation des Textes wird dann für jeden Textbaustein des Textes ein Gesamtwortvektor verwendet.

Der Gesamtwortvektor ist also keine Konkatenation der einzelnen Wortvektoren, sondern wird vorteilhafterweise in Abhängigkeit von Eigenschaften des jeweiligen Textbausteins als eine gewichtete Kombination der Wortvektoren gebildet. Dies ermöglicht vorteilhafterweise eine wort- und/oder domänenabhängige Gewichtung der Wortvektoren und bietet damit die Möglichkeit, wort- und/oder domänenabhängig bestimmte Wortvektoren zu bevorzugen oder zu vernachlässigen.

Basierend auf der vorstehend beschriebenen bereitgestellten Repräsentation des Textes sagt das Modell eine Klassifizierung für die einzelnen Textbausteine vorher. Dazu klassifiziert das Modell jedes Wort des vorliegenden Textes als zu einer vorgegebenen Menge an Klassen zugehörig, z.B. Personen, Orte, Materialien, etc..

Figur 4 stellt Schritte in einem Verfahren 400 zum Maschinenlernen dar.

Das Verfahren 400 zum Maschinenlernen umfasst das Trainieren 410 eines Modells zum Ausführen des Verfahrens gemäß den Ausführungsformen zur automatischen Klassifizierung von Textbausteinen eines Textes abhängig von der Repräsentation des Textes, wobei die Repräsentation einen Gesamtwortvektor für einen jeweiligen Textbaustein des Textes umfasst, wobei der Gesamtwortvektor aus wenigstens zwei, vorzugsweise mehreren, Wortvektoren gebildet wird, und ein jeweiliger Wortvektor in Abhängigkeit von Eigenschaften des jeweiligen Textbausteins gewichtet wird.

Das Verfahren 400 umfasst das Trainieren 411 der Attentionfunktion des Modells. Die Attentionfunktion ist beispielsweise ausgebildet, einzelne Wortvektoren der Textbausteine abhängig von Gewichten zu gewichten. Vorteilhafterweise wird das Modell anhand von Textdaten trainiert, eine optimierte Gewichtung für die einzelnen Wortvektoren zu berechnen.

Gemäß einer Ausführungsform wird das Modell trainiert, einen bestimmten Wortvektor, insbesondere einen domänenspezifischen Wortvektor, für einen bestimmten Textbaustein, insbesondere für einen domänenspezifischen Textbaustein, stärker zu gewichten als einen anderen, insbesondere domänenunspezifischen, Wortvektor.

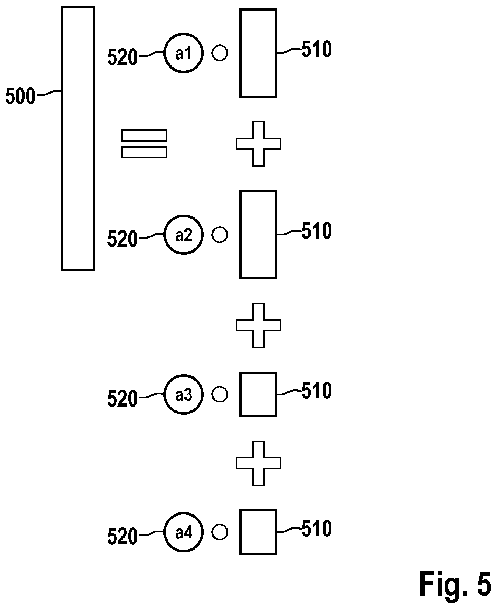

Schließlich zeigt Figur 5 eine schematische Darstellung eines Gesamtwortvektors 500. Der Gesamtwortvektor 500 umfasst gemäß der dargestellten Ausführungsform vier Wortvektoren 510, wobei jeder Wortvektor 510 mit einem Gewicht 520 multipliziert wird.

Weitere Ausführungsformen betreffen die Verwendung des computerimplementierten Verfahrens 300 zum Verarbeiten von Textdaten gemäß den Ausführungsformen zum automatischen Extrahieren von Informationen aus Textdaten 102, beispielsweise bezüglich Entitäten, insbesondere Personen, Orte, Organisationen, etc. und/oder bezüglich Konzepten, insbesondere Proteine, Chemikalien, Materialien, etc..

Weitere Ausführungsformen betreffen die Verwendung des computerimplementierten Verfahrens 300 in Modellen zum Erstellen von Datenbanken, insbesondere strukturierten Wissensdatenbanken, insbesondere Knowledge Graphen, wobei das Verfahren gemäß den Ausführungsformen angewendet wird, zum Extrahieren von Informationen aus Textdaten 102, und die Informationen zum Erstellen von Datenbanken, insbesondere strukturierten Wissensdatenbanken, insbesondere Knowledge Graphen verwendet werden.

## Patentansprüche

1. Computerimplementiertes Verfahren (300) zum Verarbeiten von Textdaten (102) umfassend eine Vielzahl von Textbausteinen, wobei eine Repräsentation des Textes (102) bereitgestellt (310) wird, und wobei ein Modell verwendet wird, das abhängig von der Repräsentation des Textes (102) eine Klassifizierung für einen jeweiligen Textbaustein des Textes (102) vorhersagt, wobei das Bereitstellen (310) der Repräsentation des Textes (102) das Bereitstellen (310') eines Gesamtwortvektors (500) für einen jeweiligen Textbaustein des Textes (102) umfasst, wobei der Gesamtwortvektor (500) aus wenigstens zwei, vorzugsweise mehreren, Wortvektoren (510) gebildet wird (314), und ein jeweiliger Wortvektor (510) in Abhängigkeit von Eigenschaften des jeweiligen Textbausteins gewichtet wird.

2. Verfahren (300) nach Anspruch 1, wobei das Verfahren (300) weiter umfasst: Berechnen (312) eines Gewichts (520) für einen jeweiligen Wortvektor (510).

3. Verfahren (300) nach wenigstens einem der vorhergehenden Ansprüche, wobei ein Gewicht (520) für einen jeweiligen Wortvektor (510) zusätzlich in Abhängigkeit des jeweiligen Wortvektors (510) berechnet wird.

4. Verfahren (300) nach wenigstens einem der vorhergehenden Ansprüche, wobei eine erste Eigenschaft eines jeweiligen Textbausteins eine relative Häufigkeit des Textbausteins im Text repräsentiert und/oder eine zweite Eigenschaft des jeweiligen Textbausteins eine Länge des Textbausteins repräsentiert und/oder eine dritte Eigenschaft des jeweiligen Textbausteins eine Form des Textbausteins und/oder eine vierte Eigenschaft des jeweiligen Textbausteins eine syntaktische Kategorie des Textbausteins repräsentiert.

5. Verfahren (300) nach wenigstens einem der vorhergehenden Ansprüche, wobei die Gewichte (520) der Wortvektoren (510) eines Gesamtwortvektors (500) in einen Wertebereich zwischen 0, 1 transformiert (313) werden.

6. Verfahren (300) nach wenigstens einem der vorhergehenden Ansprüche, wobei ein Gesamtwortvektor (500) für einen jeweiligen Textbaustein aus der Summe aus wenigstens zwei, vorzugsweise mehreren, gewichteten Wortvektoren (510) gebildet wird (314).

7. Computerimplementiertes Verfahren (400) zum Maschinenlernen, wobei ein Modell zum Ausführen des Verfahrens (400) nach wenigstens einem der Ansprüche 1 bis 6 zur automatischen Klassifizierung von Textbausteinen eines Textes (102) abhängig von der Repräsentation des Textes (102) trainiert wird (410), wobei die Repräsentation einen Gesamtwortvektor (500) für einen jeweiligen Textbaustein des Textes (102) umfasst, wobei der Gesamtwortvektor (500) aus wenigstens zwei, vorzugsweise mehreren, Wortvektoren (510) gebildet wird, und ein jeweiliger Wortvektor (510) in Abhängigkeit von Eigenschaften des jeweiligen Textbausteins gewichtet wird.

8. Verfahren (400) nach Anspruch 7, wobei das Modell eine Attentionfunktion umfasst, und das Verfahren (400) das Trainieren (411) der Attentionfunktion umfasst.

9. Verfahren (400) nach wenigstens einem der Ansprüche 7 oder 8, wobei das Modell trainiert wird, einen bestimmten Wortvektor (510), insbesondere einen domänenspezifischen Wortvektor (510), für einen bestimmten Textbaustein, insbesondere für einen domänenspezifischen Textbaustein, stärker zu gewichten als einen anderen, insbesondere domänenunspezifischen, Wortvektor (510).

10. Vorrichtung (100) zum Verarbeiten von Textdaten (102), wobei die Vorrichtung (100) einen Prozessor (104), und einen Speicher (106) für ein künstliches neuronales Netz umfasst, die ausgebildet sind das Verfahren (300) nach wenigstens einem der Ansprüche 1 bis 6 auszuführen.

11. Vorrichtung (200) zum Maschinenlernen, wobei die Vorrichtung (200) einen Prozessor (202), und einen Speicher (204) für ein künstliches neuronales Netz umfasst, die ausgebildet sind das Verfahren (400) nach wenigstens einem der Ansprüche 7 bis 9 auszuführen.

12. Computerprogramm, wobei das Computerprogramm computerlesbare Instruktionen umfasst, bei deren Ausführung auf einem Computer ein Verfahren (200) nach einem der Ansprüche 1 bis 6 abläuft.

13. Verwendung eines computerimplementierten Verfahrens (300) gemäß wenigstens einem der Ansprüche 1 bis 6 und/oder einer Vorrichtung (100) gemäß Anspruch 10 zum Verarbeiten von Textdaten (102) zum automatischen Extrahieren von Informationen aus Textdaten (102) und/oder in Modellen zum Erstellen von Datenbanken, insbesondere strukturierten Wissensdatenbanken, insbesondere Knowledge Graphen, wobei das Verfahren (200) gemäß wenigstens einem der Ansprüche 1 bis 6 angewendet wird, zum Extrahieren von Informationen aus Textdaten (102), und die Informationen zum Erstellen von Datenbanken, insbesondere strukturierten Wissensdatenbanken, insbesondere Knowledge Graphen verwendet werden.
